# EUROPÄISCHE PATENTANMELDUNG

(11) **EP 3 855 049 A1**
(43) Veröffentlichungstag der Anmeldung: **28.07.2021**
(21) Anmeldenummer: 20465501.3
(22) Anmeldetag: 23.01.2020
(51) Int. Cl.: F16J 15/04, F16J 15/06, F16J 15/10, G01L 19/14

(54) **DICHTELEMENT FÜR EINE DRUCKSENSORBAUGRUPPE FÜR EIN KRAFTFAHRZEUG UND DRUCKSENSORBAUGRUPPE**

(71) Anmelder: Continental Automotive GmbH, 30165 Hannover (DE)
(72) Erfinder: Locovei, Cosmin Ion, 90411 Nürnberg (DE); Goron, Gabriel, 90411 Nürnberg (DE); Jejeran, Cosmin, 90411 Nürnberg (DE); Pascu, Daniel-Adrian, 90411 Nürnberg (DE); Glaser, Telmo, 90411 Nürnberg (DE)
(74) Vertreter: Continental Corporation

(57) **Zusammenfassung**

Dichtelement (1) für eine Drucksensorbaugruppe (2) für ein Kraftfahrzeug zur Aufprallerkennung mit einer Drucksensoreinheit (12) im Inneren eines Baugruppengehäuses, wobei die Drucksensoreinheit (12) ein im Inneren eines Drucksensorgehäuses (11) angeordnetes Sensierelement zum Detektieren eines Luftdrucks umfasst, und wobei das Drucksensorgehäuse (11) eine Druckzuführöffnung (13) zur Zuführung des Luftdrucks von einem Druckeinlass des Baugruppengehäuses zu dem Sensierelement aufweist. Zwischen dem Drucksensorgehäuse (11) und einer Baugruppengehäusewand ist das Dichtelement (1) zum Abdichten der Druckzuführöffnung (13) gegenüber dem Innenraum des Baugruppengehäuses derart anordenbar, dass das Dichtelement (1) die Druckzuführöffnung (13) umschließt und den Druckeinlass fluidisch mit der Druckzuführöffnung (13) verbindet, wobei das Dichtelement (1) eine in axialer Richtung verlaufende Durchgangsausnehmung (3) aufweist und einen Grundkörper (4) mit einer Außenwand (5) und einer die Durchgangsausnehmung (3) umgebenden Innenwand (6) sowie mit einem unteren axialen Ende (7) und einem oberen axialen Ende (8) umfasst, wobei die Innenwand (6) des Grundkörpers (4) einen sich zum unteren axialen Ende (7) hin erweiternden ersten Wandabschnitt (9) aufweist, und wobei das untere axiale Ende (7) des Grundkörpers (4) im montierten Zustand dem Drucksensorgehäuse (11) zugewandt ist.

## Beschreibung

Die Erfindung betrifft ein Dichtelement für eine Drucksensorbaugruppe für ein Kraftfahrzeug zur Aufprallerkennung. Die Erfindung betrifft weiterhin eine Drucksensorbaugruppe mit einem derartigen Dichtelement.

Drucksensorbaugruppen in Kraftfahrzeugen sind mittlerweile weit verbreitet. Eine solche Drucksensorbaugruppe umfasst dabei üblicherweise eine im Inneren eines Baugruppengehäuses angeordnete Drucksensoreinheit, welche im Inneren eines Drucksensorgehäuses als Sensierelement beispielsweise eine Membran umfasst. Wenn die Drucksensoreinheit bzw. das Sensierelement einer Drucksensorbaugruppe einem Druck, insbesondere Luftdruck, ausgesetzt ist, reagiert die Membran durch eine Formänderung. Diese Formänderung bewirkt, dass eine oder mehrere Eigenschaften elektronischer Komponenten, insbesondere Widerstände, auf der Membran sich verändern. Diese sich ändernden Eigenschaften können sodann gemessen werden und hieraus kann somit dann der Druck bestimmt werden.

Üblicherweise wird eine solche Drucksensorbaugruppe in einem Kraftfahrzeug im Rahmen eines Sicherheitssystems zur Aufprallerkennung eingesetzt. Die Drucksensorbaugruppe misst dabei kontinuierlich einen Druck in einem weitgehend abgeschlossenen Hohlraum und sendet die Daten an ein Steuergerät für einen Airbag. Dazu wird eine solche Drucksensorbaugruppe insbesondere in den Türinnenraum einer Fahrzeugseitentüre oder in einen vergleichbaren Hohlraum des Kraftfahrzeugs eingesetzt und dabei beispielsweise an einer Öffnung in einer Wand eines solchen Hohlraums montiert, wobei der Druck in dem Hohlraum über einen Druckeinlass des Baugruppengehäuses der Drucksensoreinheit und letztlich dem Sensierelement zugeführt wird. Der bei einem Aufprall erfolgende Druckanstieg in dem Hohlraum wird erfasst und ausgewertet und basierend darauf können insbesondere ein Seitenaufprall auf das Kraftfahrzeug detektiert und geeignete Schutzmechanismen für die Fahrzeuginsassen, beispielsweise Seitenairbags, ausgelöst werden.

Damit der im Innenraum des Baugruppengehäuses vorherrschende Druck die Druckmessung nicht beeinflusst und möglichst keine Verunreinigungen oder Feuchtigkeit eindringen können, ist ein von dem Druckeinlass des Baugruppengehäuses zu der Drucksensoreinheit führender Luftkanal und insbesondere das Sensierelement der Drucksensoreinheit regelmäßig mittels eines Dichtelements gegen den Innenraum des Baugruppengehäuses abgedichtet, sodass die Drucksensoreinheit bzw. das Sensierelement mit der Umgebungsluft in dem Hohlraum und damit mit dem entsprechenden Luftdruck in dem Hohlraum beaufschlagt ist. Nachteilig gestaltet sich bei üblichen Dichtelementen jedoch insbesondere, dass diese im montierten Zustand häufig keine ausreichende Dichtfunktion gewährleisten und/oder mit ihrer Oberfläche auch relevante Bereich der Drucksensoreinheit, denen eigentlich der Druck zugeführt werden soll, zumindest teilweise ab- oder überdecken, wodurch die Druckerfassung und -bestimmung beeinträchtigt werden.

Der vorliegenden Erfindung liegt daher die Aufgabe zugrunde, ein Dichtelement für eine Drucksensorbaugruppe für ein Kraftahrzeug zur Aufprallerkennung sowie eine entsprechende Drucksensorbaugruppe anzugeben, welches eine möglichst zuverlässige und robuste Druckerfassung ermöglicht.

Die vorstehende Aufgabe wird durch die gesamte Lehre des Anspruchs 1 sowie des nebengeordneten Anspruchs 15 gelöst. Vorteilhafte Ausführungsformen und Weiterbildungen der Erfindung sind in den Unteransprüchen und der nachfolgenden Beschreibung dargelegt.

Das erfindungsgemäße Dichtelement für eine Drucksensorbaugruppe für ein Kraftfahrzeug zur Aufprallerkennung mit einer Drucksensoreinheit im Inneren eines Baugruppengehäuses, wobei die Drucksensoreinheit ein im Inneren eines Drucksensorgehäuses angeordnetes Sensierelement zum Detektieren eines Luftdrucks umfasst, wobei das Drucksensorgehäuse eine Druckzuführöffnung zur Zuführung des Luftdrucks von einem Druckeinlass des Baugruppengehäuses zu dem Sensierelement aufweist, ist zwischen dem Drucksensorgehäuse und einer Baugruppengehäusewand zum Abdichten der Druckzuführöffnung gegenüber dem Innenraum des Baugruppengehäuses derart anordenbar, dass das Dichtelement die Druckzuführöffnung umschließt und den Druckeinlass fluidisch mit der Druckzuführöffnung verbindet, wobei das Dichtelement eine in axialer Richtung verlaufende Durchgangsausnehmung aufweist und einen Grundkörper mit einer Außenwand und einer die Durchgangsausnehmung umgebenden Innenwand sowie mit einem unteren axialen Ende und einem oberen axialen Ende umfasst, wobei die Innenwand des Grundkörpers einen sich zum unteren axialen Ende hin erweiternden ersten Wandabschnitt aufweist, und wobei das untere axiale Ende des Grundkörpers im montierten Zustand dem Drucksensorgehäuse zugewandt ist.

Die Erfindung geht dabei zunächst von der Überlegung aus, dass die Druckerfassung wesentlich von der Zuführung des Drucks zu der Drucksensoreinheit bzw. dem Sensierelement und damit insbesondere von der Druckweiterleitung innerhalb des Baugruppensensorgehäuses hin zu der Druckzuführöffnung des Drucksensorgehäuses abhängt, wobei hier der korrekten Abdichtung der Druckzuführöffnung eine große Bedeutung dahingehend zukommt, dass die Druckzuführöffnung möglichst vollständig gegenüber dem Innenraum des Baugruppengehäuses abgedichtet ist und die Druckzuführöffnung dabei nicht durch die Oberfläche des entsprechenden Dichtelements abgedeckt oder überdeckt ist. Weiter geht die Erfindung von der Überlegung aus, dass ein entsprechendes Dichtelement dabei auf eine bestimmte Einbausituation der Bauteile der Drucksensorbaugruppe möglichst optimal ausgelegt sein und hierbei aber auch Fertigungs- und Einbautoleranzen der entsprechenden Bauteile berücksichtigen und ausgleichen muss. Daher sieht die Erfindung insbesondere vor, dass die Innenwand des Grundkörpers des Dichtelements einen sich zum unteren axialen Ende des Grundkörpers hin erweiternden ersten Wandabschnitt aufweist, wobei das untere axiale Ende des Grundkörpers im montierten Zustand dem Drucksensorgehäuse zugewandt ist, d.h. dass im montierten Zustand der erste Wandabschnitt am drucksensorgehäuseseitigen Ende der Innenwand des Grundkörpers ausgebildet ist. Durch eine derartige Ausgestaltung kann sichergestellt oder zumindest die Wahrscheinlichkeit wesentlich erhöht werden, dass auch beim Auftreten von verhältnismäßig großen Fertigungs- und Einbautoleranzen das Dichtelement um die Druckzuführöffnung herum insbesondere an dem Drucksensorgehäuse möglichst vollständig dichtend anliegt und dabei die Druckzuführöffnung durch die Oberfläche des Dichtelements nicht oder nur in einem unwesentlichen Maße abgedeckt oder überdeckt wird, wodurch eine erforderliche Druckweiterleitung letztlich zu dem Sensierelement gewährleistet wird.

Die erfindungsgemäße Ausgestaltung hat den Vorteil, dass dadurch ein Dichtelement für eine Drucksensorbaugruppe für ein Kraftfahrzeug zur Aufprallerkennung bereitgestellt wird, welches eine möglichst zuverlässige und robuste Druckerfassung ermöglicht.

Der Grundkörper kann insbesondere eine kreisförmige, ovale, polygonale oder rechteckige Querschnittsform aufweisen.

Der erste Wandabschnitt der Innenwand des Grundkörpers ist im Bereich und insbesondere unmittelbar an dem unteren axialen Ende des Grundkörpers angeordnet.

Vorteilhafterweise weist die Innenwand des Grundkörpers einen sich zum unteren axialen Ende hin stetig erweiternden ersten Wandabschnitt auf.

Die Durchgangsausnehmung des Dichtelements ist insbesondere dazu ausgebildet, im montierten Zustand des Dichtelements den Luftdruck von einem Druckeinlass des Baugruppengehäuses durch das Dichtelement hindurch an die Druckzuführöffnung des Drucksensorgehäuses und letztlich an das Sensierelement weiterzuleiten. Dabei kann die Durchgangsausnehmung unmittelbar oder mittelbar, beispielsweise über einen durch eine Baugruppengehäusewand hindurchführenden Druckkanal, fluidisch mit dem Druckeinlass verbunden sein.

Die Druckzuführöffnung ist zweckmäßigerweise an einem Drucksensorgehäusedeckel, welcher im Rahmen dieser Erfindung als Bestandteil des Drucksensorgehäuses verstanden kann, ausgebildet.

Das Drucksensorgehäuse der Drucksensoreinheit weist zumindest eine Druckzuführöffnung auf. Es ist aber auch möglich, dass das Drucksensorgehäuse mehr als eine Druckzuführöffnung, insbesondere zwei Druckzuführöffnungen, aufweist. Bei mehr als einer Druckzuführöffnungen ist das Dichtelement im montierten Zustand insbesondere derart angeordnet, dass das Dichtelement sämtliche Druckzuführöffnungen möglichst umschließt und den Druckeinlass fluidisch mit den Druckzuführöffnungen verbindet. Dabei liegt das Dichtelement hier zweckmäßigerweise zumindest an einer der Druckzuführöffnungen möglichst vollständig dichtend an und zumindest diese eine Druckzuführöffnung ist durch die Oberfläche des Dichtelements nicht oder nur in einem unwesentlichen Maße abgedeckt oder überdeckt wird.

In einer vorteilhaften Ausführungsform bildet der erste Wandabschnitt eine Anlagefläche zur Anlage an das Drucksensorgehäuse, an welcher das Drucksensorgehäuse im montierten Zustand zumindest bereichsweise anliegt. Der im unmontierten Zustand sich zum unteren axialen Ende des Grundkörpers hin erweiternde erste Wandabschnitt ermöglicht eine ausreichend sichere Dichtfunktion, wobei hierfür eine verhältnismäßig kleine korrespondierende Fläche an dem Drucksensorgehäuse mit der Oberfläche des Dichtelements in Kontakt steht und somit durch die Oberfläche des Dichtelements abgedeckt wird. Dadurch wird insbesondere eine hohe Variabilität in Bezug auf eine Einbauposition des Dichtelements in Relation zu der Position des Drucksensorgehäuses und insbesondere zu der Position der Druckzuführöffnung des Drucksensorgehäuses ermöglicht, bei welcher eine ausreichend sichere Dichtfunktion gewährleistet und dabei ein Ab- oder Überdecken der Druckzuführöffnung verhindert werden.

In einer weiteren vorteilhaften Ausführungsform weist die Innenwand des Grundkörpers einen sich zum ersten Wandabschnitt hin erweiternden, vorteilhafterweise stetig erweiternden, zweiten Wandabschnitt auf, wobei der zweite Wandabschnitt einen von einem ersten Grad der Erweiterung des ersten Wandabschnitts verschiedenen zweiten Grad der Erweiterung aufweist. Es schließt sich also der zweite Wandabschnitt insbesondere unmittelbar an den ersten Wandabschnitt an. Durch eine solche Ausgestaltung mit zwei Wandabschnitten mit einem unterschiedlichen Grad der Erweiterung werden die Variabilität der Einbauposition des Dichtelements und damit ein großer Toleranzbereich weiter gefördert. Vorzugsweise ist dabei der erste Grad der Erweiterung größer als der zweite Grad der Erweiterung. Auf diese Weise wird insbesondere die Wahrscheinlichkeit weiter erhöht, dass im montierten Zustand die Druckzuführöffnung durch die Oberfläche des Dichtelements nicht ab- oder überdeckt wird.

In einer weiteren vorteilhaften Ausführungsform ist der Grundkörper im Wesentlichen hohlzylinderförmig ausgebildet, wobei die Außenwand als Außenumfangswand und die Innenwand als Innenumfangswand ausgebildet sind, und wobei der erste Wandabschnitt der Innenumfangswand sich zum unteren axialen Ende hin konisch erweitert. Dies stellt eine besonders geeignete Ausgestaltung des Grundkörpers und des ersten Wandabschnitts dar, welche eine verhältnismäßig einfache Herstellung und Montage des Dichtelements ermöglicht sowie eine ausreichend zuverlässige Dichtfunktion unter Vermeidung des Ab- oder Überdeckens der Druckzuführöffnung durch die Oberfläche des Dichtelements gewährleistet.

Der zweite Wandabschnitt der Innenumfangswand erweitert sich dabei in einer weiteren vorteilhaften Ausführungsform zum ersten Wandabschnitt hin konisch, wobei der zweite Wandabschnitt einen von einem ersten Öffnungswinkel des ersten Wandabschnitts verschiedenen zweiten Öffnungswinkel aufweist, und wobei vorzugsweise der erste Öffnungswinkel größer als der zweite Öffnungswinkel ist.

In einer weiteren vorteilhaften Ausführungsform ist der erste Öffnungswinkel aus einem Bereich von 90° bis 160°, vorzugsweise aus einem Bereich von 120° bis 135°, gewählt. Ein solcher erster Öffnungswinkel des ersten Wandabschnitts ist besonders geeignet, eine sichere Dichtfunktion zu gewährleisten, wobei hierfür eine besonders kleine korrespondierende Fläche an dem Drucksensorgehäuse mit der Oberfläche des Dichtelements in Kontakt steht und somit durch das Dichtelement abgedeckt oder überdeckt wird.

Der zweite Öffnungswinkel ist in einer weiteren vorteilhaften Ausführungsform aus einem Bereich von 30° bis 90°, vorzugsweise aus einem Bereich von 55° bis 70°, gewählt. Ein solcher zweiter Öffnungswinkel des zweiten Wandabschnitts gewährleistet in einem besonders hohen Maße, dass die Druckzuführöffnung im montierten Zustand durch die Oberfläche des Dichtelements nicht oder nur in einem unwesentlichen Maße abgedeckt oder überdeckt wird.

In einer weiteren vorteilhaften Ausführungsform ist der Grundkörper elastisch ausgebildet, vorteilhafterweise besteht der Grundkörper aus einem elastischen Material. Durch den elastisch verformbaren Grundkörper kann das Dichtelement zwischen dem Drucksensorgehäuse und einer Baugruppengehäusewand verspannt und damit möglichst positionsfest angeordnet werden. Zudem trägt die elastische Verformbarkeit des Grundkörper weiter dazu bei, dass der Grundkörper im montierten Zustand des Dichtelements unter Eintreten einer gewissen Verformung derart an das Drucksensorgehäuse angelegt ist, dass eine Ab- oder Überdeckung der Druckzuführöffnung durch die Oberfläche des Dichtelements möglichst verhindert oder das Ausmaß der Ab- oder Überdeckung zumindest reduziert wird.

In einer weiteren vorteilhaften Ausführungsform umfasst das Dichtelement ein im Wesentlichen plattenförmig ausgebildetes Auflageelement, welches eine plane Auflagefläche zur Auflage des Dichtelements auf die Baugruppengehäusewand aufweist. Im montierten Zustand des Dichtelements liegt das Auflageelement mit seiner Auflagefläche somit dichtend an der Baugruppengehäusewand an, welche in dem Bereich der Auflagefläche insbesondere plan ausgestaltet ist.

Dabei schließt sich das Auflageelement vorteilhafterweise an das obere axiale Ende des Grundkörpers an, wobei die Auflagefläche an der dem axialen Ende des Grundkörpers abgewandten Oberfläche des Auflageelements ausgebildet ist.

In einer weiteren vorteilhaften Ausführungsform weist das Auflageelement eine im Wesentlichen rechteckige Grundform, vorzugsweise eine im Wesentlichen quadratische Grundform, auf. Dabei sind die Ecken des Auflageelements zweckmäßigerweise abgerundet ausgestaltet. Der durch das Auflageelement verlaufende Abschnitt der Durchgangsausnehmung des Dichtelements liegt insbesondere im Zentrum des Auflageelements. Durch eine derartige Ausgestaltung ist das Auflageelement und damit insgesamt das Dichtelement verhältnismäßig einfach und kostengünstig herzustellen und zu montieren.

Vorteilhafterweise weist die Durchgangsausnehmung in dem Auflageelement einen sich zu der Auflagefläche hin erweiternden, vorzugsweise stetig erweiternden, ersten Eintrittsabschnitt auf. In einer vorteilhaften Ausführungsform weist die Durchgangsausnehmung in dem Auflageelement einen sich zu der Auflagefläche hin konisch erweiternden ersten Eintrittsabschnitt auf. Im montierten Zustand des Dichtelements ist der erste Eintrittsabschnitt somit der Baugruppengehäusewand zugewandt. Vorzugsweise ist der erste Eintrittsabschnitt einer Ausgangsöffnung eines durch die Baugruppengehäusewand hindurchführenden und den Druckeinlass des Baugruppengehäuses fluidisch mit der Durchgangsausnehmung des Dichtelements verbindenden Druckkanals zugewandt, bevorzugt liegen dabei die Ausgangsöffnung des Druckkanals und zumindest der erste Eintrittsabschnitt der Durchgangsausnehmung koaxial zueinander. Diese Ausgestaltung der Durchgangsausnehmung im Auflageelement ermöglicht, dass in einem großen Toleranzbereich bezüglich Fertigungs- und Einbautoleranzen der Luftdruck vom Druckeinlass des Baugruppengehäuses über die Durchgangsausnehmung des Dichtelements dem Sensierelement der Drucksensoreinheit zuverlässig zugeführt werden kann.

In einer weiteren vorteilhaften Ausführungsform ist die Durchgangsausnehmung in dem Auflageelement in einem zweiten Eintrittsabschnitt als eine zylinderförmige Bohrung ausgestaltet, wobei sich der zweite Eintrittsabschnitt an das obere axiale Ende des Grundkörpers anschließt. Vorzugsweise liegt der zweite Eintrittsabschnitt unmittelbar zwischen dem ersten Eintrittsabschnitt des Auflageelements und dem oberen axialen Ende des Grundkörpers, in einer zweckmäßigen Ausführungsform unmittelbar zwischen dem ersten Eintrittsabschnitt des Auflageelements und dem zweiten Wandabschnitt des Grundkörpers, wodurch die zylinderförmige Bohrung somit fluidisch den ersten Eintrittsabschnitt des Auflageelements mit dem im Grundkörper ausgebildeten Abschnitt der Durchgangsausnehmung verbindet.

In einer weiteren vorteilhaften Ausführungsform ist ein dritter Öffnungswinkel des ersten Eintrittsabschnitts aus einem Bereich von 90° bis 160°, vorzugsweise aus einem Bereich von 120° bis 135°, gewählt. Ein solcher dritter Öffnungswinkel des ersten Eintrittsabschnitts stellt einen besonders geeigneten Kompromiss zwischen einer ausreichend sicheren Dichtfunktion und einem ausreichend großen Toleranzbereich bezüglich Fertigungs- und Einbautoleranzen dar.

In einer vorteilhaften Ausführungsform ist das Dichtelement einstückig ausgebildet. Dies erleichtert die Herstellung und Montage des Dichtelements und wirkt sich positiv auf die insgesamte Dichtfunktion sowie die Dauerhaftigkeit bzw. Nutzungsdauer des Dichtelements aus. Vorteilhafterweise ist dabei das Dichtelement insgesamt elastisch ausgebildet.

Ferner umfasst die vorliegende Erfindung eine Drucksensorbaugruppe für ein Kraftfahrzeug zur Aufprallerkennung mit einer Drucksensoreinheit im Inneren eines Baugruppengehäuses, wobei die Drucksensoreinheit ein im Inneren eines Drucksensorgehäuses angeordnetes Sensierelement zum Detektieren eines Luftdrucks umfasst, wobei das Drucksensorgehäuse eine Druckzuführöffnung zur Zuführung des Luftdrucks von einem Druckeinlass des Baugruppengehäuses zu dem Sensierelement aufweist, wobei zwischen dem Drucksensorgehäuse und einer Baugruppengehäusewand ein erfindungsgemäßes Dichtelement zum Abdichten der Druckzuführöffnung gegenüber dem Innenraum des Baugruppengehäuses derart angeordnet ist, dass das Dichtelement die Druckzuführöffnung umschließt und den Druckeinlass fluidisch mit der Druckzuführöffnung verbindet.

Die für das erfindungsgemäße Dichtelement beschriebenen Vorteile und bevorzugten Ausführungsformen gelten entsprechend auch für die erfindungsgemäße Drucksensorbaugruppe.

Vorzugsweise weist die Drucksensorbaugruppe einen durch die Baugruppengehäusewand hindurchführenden und den Druckeinlass des Baugruppengehäuses fluidisch mit der Durchgangsausnehmung des Dichtelements verbindenden Druckkanal auf, wobei bevorzugt eine Ausgangsöffnung des Druckkanals und die Durchgangsausnehmung im Wesentlichen koaxial zueinander liegen.

Ausführungsbeispiele der Erfindung werden im Folgenden anhand einer Zeichnung näher erläutert. Darin zeigen:
- Fig. 1: in einer perspektivischen Darstellung ein Dichtelement in einer Ansicht von unten,
- Fig. 2: in einer perspektivischen Darstellung das Dichtelement gemäß Fig. 1 in einer Ansicht von oben,
- Fig. 3: in einer perspektivischen Darstellung das Dichtelement gemäß Fig. 1 in einem Querschnitt, und
- Fig. 4: in einer perspektivischen Schnittdarstellung eine Drucksensorbaugruppe mit einem eingebauten Dichtelement gemäß Fig. 1 bis 3.

Einander entsprechende Teile sind in allen Figuren stets mit gleichen Bezugszeichen versehen.

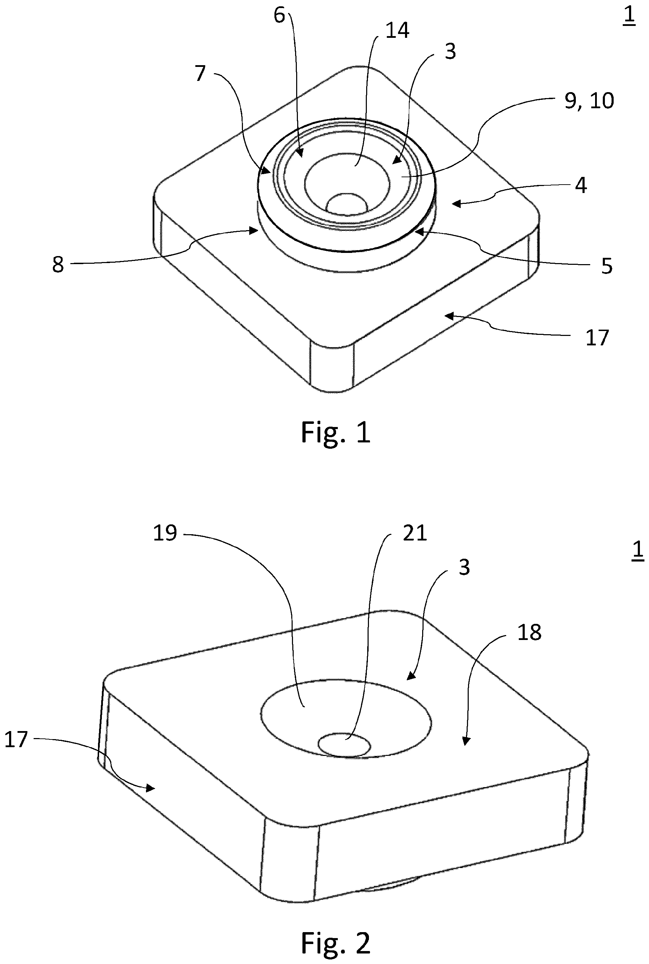

In den Fig. 1 bis 3 ist in perspektivischen Darstellungen ein Ausführungsbeispiel eines Dichtelements 1 in unterschiedlichen Ansichten dargestellt. Das Dichtelement 1 ist einstückig ausgebildet und ist zur Anordnung im Inneren eines Baugruppengehäuses einer Drucksensorbaugruppe 2 für ein Kraftfahrzeug zur Aufprallerkennung ausgebildet.

Fig. 1 zeigt das Dichtelement 1 in einer perspektivischen Darstellung in einer Ansicht von unten. Das Dichtelement 1 weist eine in axialer Richtung verlaufende Durchgangsausnehmung 3 auf und umfasst einen im Wesentlichen hohlzylinderförmigen Grundkörper 4 mit einer Außenumfangswand 5 und einer die Durchgangsausnehmung 3 umgebenden Innenumfangswand 6 sowie mit einem unteren axialen Ende 7 und einem oberen axialen Ende 8. Die Innenumfangswand 6 des Grundkörpers 4 weist dabei einen sich zum unteren axialen Ende 7 hin konisch erweiternden ersten Wandabschnitt 9 auf. Der erste Wandabschnitt 9 der Innenumfangswand 6 des Grundkörpers 4 ist also an dem unteren axialen Ende 7 des Grundkörpers 4 angeordnet.

Der erste Wandabschnitt 9 bildet dabei eine Anlagefläche 10 zur Anlage an ein Drucksensorgehäuse 11 einer im Inneren des Baugruppengehäuses angeordneten Drucksensoreinheit 12. Im montierten Zustand liegt das Drucksensorgehäuse 11 also zumindest bereichsweise an der Anlagefläche 10 an.

Dabei ermöglicht der im unmontierten Zustand sich zum unteren axialen Ende 7 hin konisch erweiternde erste Wandabschnitt 9 des Grundkörpers 4 des Dichtelements 1 eine ausreichend sichere Dichtfunktion, wobei hierfür eine verhältnismäßig kleine korrespondierende Fläche an dem Drucksensorgehäuse 11 mit der Oberfläche des Dichtelements 1 in Kontakt steht und somit durch die Oberfläche des Dichtelements 1 abgedeckt oder überdeckt wird. Dadurch wird insbesondere eine hohe Variabilität in Bezug auf eine Einbauposition des Dichtelements 1 in Relation zu der Position des Drucksensorgehäuses 11 und insbesondere zu der Position einer Druckzuführöffnung 13 des Drucksensorgehäuses 11 ermöglicht, bei welcher eine ausreichend sichere Dichtfunktion gewährleistet und dabei ein Ab- oder Überdecken der Druckzuführöffnung 13 verhindert werden.

Darüber hinaus weist die Innenumfangswand 6 des Grundkörpers 4 einen sich zum ersten Wandabschnitt 9 hin konisch erweiternden zweiten Wandabschnitt 14 auf, wobei sich der zweite Wandabschnitt 14 unmittelbar an den ersten Wandabschnitt 9 anschließt. Der zweite Wandabschnitt 14 weist einen gegenüber einem ersten Öffnungswinkel 15 des ersten Wandabschnitts 9 kleineren zweiten Öffnungswinkel 16 auf. Mit anderen Worten ist also der erste Öffnungswinkel 15 größer als der zweite Öffnungswinkel 16. Dabei beträgt der erste Öffnungswinkel 15 127° und der zweite Öffnungswinkel 16 beträgt 63°.

Der erste Öffnungswinkel 15 mit einem Wert von 127° ist besonders geeignet, eine sichere Dichtfunktion zu gewährleisten, wobei hierfür im montierten Zustand eine besonders kleine korrespondierende Fläche an dem Drucksensorgehäuse 11 mit der Oberfläche des Dichtelements 1 in Kontakt steht und somit durch das Dichtelement 1 abgedeckt wird. Der zweite Öffnungswinkel 16 mit einem Wert von 63° gewährleistet zusätzlich, dass die Druckzuführöffnung 13 im montierten Zustand durch die Oberfläche des Dichtelements 1 nicht oder nur in einem unwesentlichen Maße abgedeckt oder überdeckt wird. Insgesamt werden durch eine derartige Ausgestaltung somit die Variabilität der Einbauposition des Dichtelements 1 und damit ein großer Toleranzbereich weiter gefördert und es wird die Wahrscheinlichkeit weiter erhöht, dass im montierten Zustand die Druckzuführöffnung 13 durch die Oberfläche des Dichtelements 1 nicht abgedeckt oder überdeckt wird.

Darüber hinaus ist der Grundkörper 4 elastisch ausgebildet, wodurch das Dichtelement 1 zwischen dem Drucksensorgehäuse 11 und einer Baugruppengehäusewand des Baugruppengehäuses verspannt und damit möglichst positionsfest angeordnet werden kann. Zudem trägt die elastische Verformbarkeit des Grundkörper 4 weiter dazu bei, dass der Grundkörper 4 im montierten Zustand des Dichtelements 1 unter Eintreten einer gewissen Verformung derart an das Drucksensorgehäuse 11 angelegt ist, dass eine Ab- oder Überdeckung der Druckzuführöffnung 13 durch die Oberfläche des Dichtelements 1 möglichst verhindert oder das Ausmaß der Ab- oder Überdeckung zumindest reduziert wird.

Das Dichtelement 1 umfasst des Weiteren ein im Wesentlichen plattenförmig ausgebildetes Auflageelement 17, welches sich unmittelbar an das obere axiale Ende 8 des Grundkörpers 4 anschließt.

Das Auflageelement 17 weist eine plane Auflagefläche 18 zur Auflage des Dichtelements 1 auf die Baugruppengehäusewand auf. Dies ist in Fig. 2 anhand einer perspektivischen Darstellung des Dichtelements 1 in einer Ansicht von oben erkennbar.

Im montierten Zustand des Dichtelements 1 liegt das Auflageelement 17 mit seiner Auflagefläche 18 somit dichtend an der Baugruppengehäusewand an, welche in dem Bereich der Auflagefläche 18 insbesondere ebenfalls plan ausgestaltet ist.

Wie ebenfalls in Fig. 2 gut erkennbar ist, weist das Auflageelement 17 eine quadratische Grundform mit abgerundeten Ecken auf, wobei der durch das Auflageelement 17 verlaufende Abschnitt der Durchgangsausnehmung 3 des Dichtelements 1 im Zentrum des Auflageelements 17 liegt. Durch eine derartige Ausgestaltung ist das Auflageelement 17 und damit insgesamt das Dichtelement 1 verhältnismäßig einfach und kostengünstig herzustellen und zu montieren.

Die Durchgangsausnehmung 3 weist in dem Auflageelement 17 einen sich zu der Auflagefläche 18 hin konisch erweiternden ersten Eintrittsabschnitt 19 auf. Dabei beträgt ein dritter Öffnungswinkel 20 des ersten Eintrittsabschnitts 19 125°. Dies stellt einen besonders geeigneten Kompromiss zwischen einer ausreichend sicheren Dichtfunktion und einem ausreichend großen Toleranzbereich bezüglich Fertigungs- und Einbautoleranzen dar.

Ferner ist die Durchgangsausnehmung 3 in dem Auflageelement 17 in einem zweiten Eintrittsabschnitt 21 als eine zylinderförmige Bohrung ausgestaltet, wobei sich der zweite Eintrittsabschnitt 21 an das obere axiale Ende 8 des Grundkörpers 4 anschließt. Dabei liegt der zweite Eintrittsabschnitt 21 unmittelbar zwischen dem ersten Eintrittsabschnitt 19 des Auflageelements 17 und dem zweiten Wandabschnitt 14 des Grundkörpers 4, wodurch die zylinderförmige Bohrung somit fluidisch den ersten Eintrittsabschnitt 19 des Auflageelements 17 mit dem im Grundkörper 4 ausgebildeten Abschnitt der Durchgangsausnehmung 3 verbindet.

Im montierten Zustand des Dichtelements ist der erste Eintrittsabschnitt 19 der Baugruppengehäusewand derart zugewandt, dass der erste Eintrittsabschnitt 19 einer Ausgangsöffnung eines durch die Baugruppengehäusewand hindurchführenden und einen Druckeinlass des Baugruppengehäuses fluidisch mit der Durchgangsausnehmung 3 des Dichtelements 1 verbindenden Druckkanals zugewandt ist, wobei die Ausgangsöffnung des Druckkanals und der erste Eintrittsabschnitt 19 der Durchgangsausnehmung 3 koaxial zueinander liegen.

Die Ausgestaltung der Durchgangsausnehmung 3 im Auflageelement 17 ermöglicht dabei, dass in einem großen Toleranzbereich bezüglich Fertigungs- und Einbautoleranzen der Luftdruck vom Druckeinlass des Baugruppengehäuses über die Durchgangsausnehmung 3 des Dichtelements 1 der Drucksensoreinheit 12 zuverlässig zugeführt werden kann.

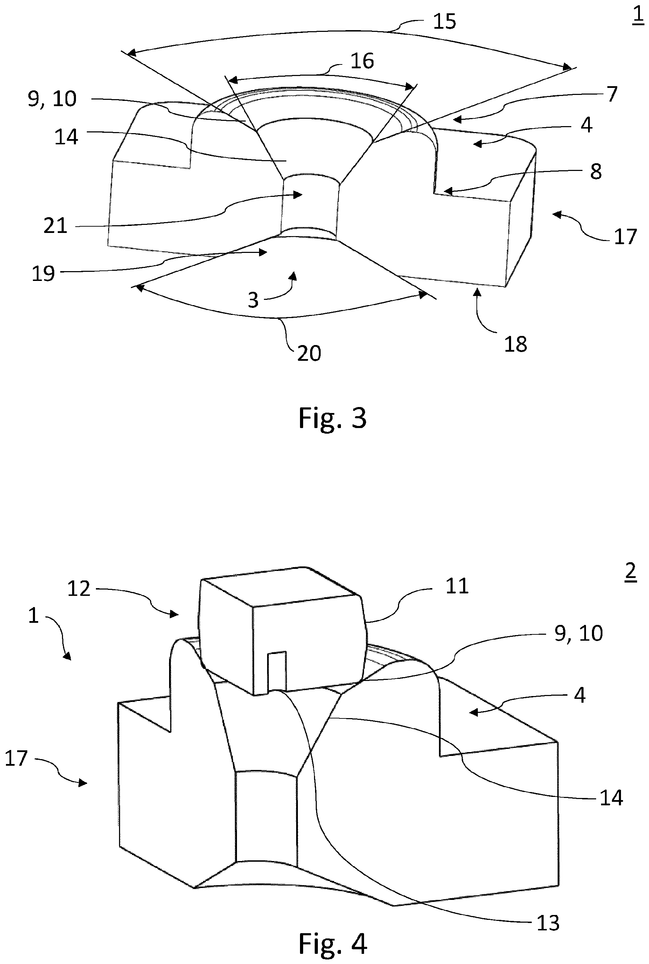

In Fig. 3 sind anhand einer perspektivischen Darstellung des Dichtelements 1 in einem Querschnitt nochmals wesentliche konstruktive Ausgestaltungen des Dichtelements 1 anschaulich dargestellt.

Es sind hier der im Wesentlichen hohlzylinderförmige Grundkörper 4 und das im Wesentlichen plattenförmig ausgebildete Auflageelement 17, welches sich unmittelbar an das obere axiale Ende 8 des Grundkörpers 4 anschließt, sowie die in axialer Richtung verlaufende Durchgangsausnehmung 3 erkennbar.

Zudem sind der sich zum unteren Ende 7 hin konisch erweiternde erste Wandabschnitt 9 und der sich zum ersten Wandabschnitt 9 hin konisch erweiternden zweiten Wandabschnitt 14 der Innenumfangswand 6 des Grundkörpers 4 deutlich erkennbar. Ersichtlich ist der erste Öffnungswinkel 15 des ersten Wandabschnitts 9 mit 127° größer als der zweite Öffnungswinkel 16 des zweiten Wandabschnitts 14 mit 63°.

Auch erkennbar sind der sich zu der Auflagefläche 18 des Auflageelements 17 hin konisch erweiternde erste Eintrittsabschnitt 19 sowie der als zylinderförmige Bohrung ausgestaltete zweite Eintrittsabschnitt 21 der Durchgangsausnehmung 3 in dem Auflageelement 17.

Fig. 4 zeigt in einer perspektivischen Schnittdarstellung eine Drucksensorbaugruppe 2 mit einem eingebauten Dichtelement 1 gemäß Fig. 1 bis 3.

Die Drucksensorbaugruppe 2 für ein Kraftfahrzeug zur Aufprallerkennung umfasst eine schematisch dargestellte Drucksensoreinheit 12 im Inneren eines Baugruppengehäuses (nicht dargestellt), wobei die Drucksensoreinheit 12 ein im Inneren eines Drucksensorgehäuses 11 angeordnetes Sensierelement (nicht dargestellt) zum Detektieren eines Luftdrucks im Türinnenraum einer Fahrzeugseitentüre aufweist. Das Drucksensorgehäuse 11 weist eine Druckzuführöffnung 13 zur Zuführung des Luftdrucks von einem Druckeinlass des Baugruppengehäuses zu dem Sensierelement auf, wobei zwischen dem Drucksensorgehäuse 11 und einer Baugruppengehäusewand (nicht dargestellt) das Dichtelement 1 zum Abdichten der Druckzuführöffnung 13 gegenüber dem Innenraum des Baugruppengehäuses derart angeordnet ist, dass das Dichtelement 1 die Druckzuführöffnung 13 umschließt und den Druckeinlass fluidisch mit der Druckzuführöffnung 13 verbindet.

Das Drucksensorgehäuse 11 liegt dabei an der durch den ersten Wandabschnitt 9 ausgebildeten Anlagefläche 10 des Grundkörpers 4 des Dichtelements 1 bereichsweise an, wodurch eine ausreichend sichere Dichtfunktion unter Beanspruchung einer verhältnismäßigen kleinen Fläche an dem Drucksensorgehäuse 11, welche mit der Oberfläche des Dichtelements 1 in Kontakt steht, gewährleistet ist. Dadurch ist eine hohe Variabilität in Bezug auf die Einbauposition des Dichtelements 1 in Relation zu der Position des Drucksensorgehäuses 11 und insbesondere zu der Position der Druckzuführöffnung 13 des Drucksensorgehäuses 11 ermöglicht, bei welcher eine ausreichend sichere Dichtfunktion gewährleistet und dabei ein Ab- oder Überdecken der Druckzuführöffnung 13 verhindert werden. Der zweite Wandabschnitt 14 des Grundkörpers 4 des Dichtelements 1 trägt zusätzlich dazu bei, dass die Druckzuführöffnung 13 durch die Oberfläche des Dichtelements 1 nicht abgedeckt oder überdeckt wird.

Darüber hinaus liegt das Auflageelement 17 des Dichtelements 1 mit seiner planen Auflagefläche 18 dichtend an der Baugruppengehäusewand auf. Der sich zu der Auflagefläche 18 hin konisch erweiternden erste Eintrittsabschnitt 19 der Durchgangsausnehmung 3 ist dabei der Baugruppengehäusewand derart zugewandt, dass der erste Eintrittsabschnitt 19 einer Ausgangsöffnung (nicht dargestellt) eines durch die Baugruppengehäusewand hindurchführenden und einen Druckeinlass des Baugruppengehäuses fluidisch mit der Durchgangsausnehmung 3 des Dichtelements 1 verbindenden Druckkanals (nicht dargestellt) zugewandt ist, wobei die Ausgangsöffnung des Druckkanals und der erste Eintrittsabschnitt 19 der Durchgangsausnehmung 3 koaxial zueinander liegen. Die Ausgestaltung der Durchgangsausnehmung 3 im Auflageelement 17 ermöglicht dabei, dass in einem großen Toleranzbereich bezüglich Fertigungs- und Einbautoleranzen der Luftdruck vom Druckeinlass des Baugruppengehäuses über die Durchgangsausnehmung 3 des Dichtelements 1 der Drucksensoreinheit 12 zuverlässig zugeführt werden kann.

Durch die elastische Ausbildung des Grundkörpers 4 ist das Dichtelement 1 zwischen dem Drucksensorgehäuse 11 und der Baugruppengehäusewand unter einer gewissen elastischen Verformung insbesondere des Grundkörpers 4 verspannt und damit positionsfest angeordnet. Zudem trägt die elastische Verformung insbesondere des Grundkörper 4 weiter dazu bei, dass der Grundkörper 4 derart an das Drucksensorgehäuse 11 angelegt ist, dass eine Ab- oder Überdeckung der Druckzuführöffnung 13 durch die Oberfläche des Dichtelements 1 verhindert wird.

### Bezugszeichenliste

- 1: Dichtelement
- 2: Drucksensorbaugruppe
- 3: Durchgangsausnehmung
- 4: Grundkörper
- 5: Außenumfangswand
- 6: Innenumfangswand
- 7: unteres axiales Ende
- 8: oberes axiales Ende
- 9: erster Wandabschnitt
- 10: Anlagefläche
- 11: Drucksensorgehäuse
- 12: Drucksensoreinheit
- 13: Druckzuführöffnung
- 14: zweiter Wandabschnitt
- 15: erster Öffnungswinkel
- 16: zweiter Öffnungswinkel
- 17: Auflageelement
- 18: Auflagefläche
- 19: erster Eintrittsabschnitt
- 20: dritter Öffnungswinkel
- 21: zweiter Eintrittsabschnitt

## Patentansprüche

1. Dichtelement (1) für eine Drucksensorbaugruppe (2) für ein Kraftfahrzeug zur Aufprallerkennung mit einer Drucksensoreinheit (12) im Inneren eines Baugruppengehäuses, wobei die Drucksensoreinheit (12) ein im Inneren eines Drucksensorgehäuses (11) angeordnetes Sensierelement zum Detektieren eines Luftdrucks umfasst, wobei das Drucksensorgehäuse (11) eine Druckzuführöffnung (13) zur Zuführung des Luftdrucks von einem Druckeinlass des Baugruppengehäuses zu dem Sensierelement aufweist, wobei zwischen dem Drucksensorgehäuse (11) und einer Baugruppengehäusewand das Dichtelement (1) zum Abdichten der Druckzuführöffnung (13) gegenüber dem Innenraum des Baugruppengehäuses derart anordenbar ist, dass das Dichtelement (1) die Druckzuführöffnung (13) umschließt und den Druckeinlass fluidisch mit der Druckzuführöffnung (13) verbindet, wobei das Dichtelement (1) eine in axialer Richtung verlaufende Durchgangsausnehmung (3) aufweist und einen Grundkörper (4) mit einer Außenwand (5) und einer die Durchgangsausnehmung (3) umgebenden Innenwand (6) sowie mit einem unteren axialen Ende (7) und einem oberen axialen Ende (8) umfasst, wobei die Innenwand (6) des Grundkörpers (4) einen sich zum unteren axialen Ende (7) hin erweiternden ersten Wandabschnitt (9) aufweist, und wobei das untere axiale Ende (7) des Grundkörpers (4) im montierten Zustand dem Drucksensorgehäuse (11) zugewandt ist.

2. Dichtelement (1) nach Anspruch 1, wobei der erste Wandabschnitt (9) eine Anlagefläche (10) zur Anlage an das Drucksensorgehäuse (11) bildet, an welcher das Drucksensorgehäuse (11) im montierten Zustand zumindest bereichsweise anliegt.

3. Dichtelement (1) nach Anspruch 1 oder 2, wobei die Innenwand (6) des Grundkörpers (4) einen sich zum ersten Wandabschnitt (9) hin erweiternden zweiten Wandabschnitt (14) aufweist, wobei der zweite Wandabschnitt (14) einen von einem ersten Grad der Erweiterung des ersten Wandabschnitts (9) verschiedenen zweiten Grad der Erweiterung aufweist, und wobei vorzugsweise der erste Grad der Erweiterung größer als der zweite Grad der Erweiterung ist.

4. Dichtelement (1) nach einem der vorhergehenden Ansprüche, wobei der Grundkörper (4) im Wesentlichen hohlzylinderförmig ausgebildet ist, wobei die Außenwand als Außenumfangswand (5) und die Innenwand als Innenumfangswand (6) ausgebildet sind, und wobei der erste Wandabschnitt (9) der Innenumfangswand (5) sich zum unteren axialen Ende (7) hin konisch erweitert.

5. Dichtelement (1) nach Anspruch 3 und 4, wobei der zweite Wandabschnitt (14) der Innenumfangswand (6) sich zum ersten Wandabschnitt (9) hin konisch erweitert, wobei der zweite Wandabschnitt (14) einen von einem ersten Öffnungswinkel (15) des ersten Wandabschnitts (9) verschiedenen zweiten Öffnungswinkel (16) aufweist, und wobei vorzugsweise der erste Öffnungswinkel (15) größer als der zweite Öffnungswinkel (16) ist.

6. Dichtelement (1) nach einem der Ansprüche 4 bis 5, wobei der erste Öffnungswinkel (15) aus einem Bereich von 90° bis 160°, vorzugsweise aus einem Bereich von 120° bis 135°, gewählt ist.

7. Dichtelement (1) nach einem der Ansprüche 5 bis 6, wobei der zweite Öffnungswinkel (16) aus einem Bereich von 30° bis 90°, vorzugsweise aus einem Bereich von 55° bis 70°, gewählt ist.

8. Dichtelement (1) nach einem der vorhergehenden Ansprüche, wobei der Grundkörper (4) elastisch ausgebildet ist.

9. Dichtelement (1) nach einem der vorhergehenden Ansprüche, wobei das Dichtelement (1) ein im Wesentlichen plattenförmig ausgebildetes Auflageelement (17) umfasst, welches eine plane Auflagefläche (18) zur Auflage des Dichtelements (1) auf die Baugruppengehäusewand aufweist.

10. Dichtelement (1) nach Anspruch 9, wobei sich das Auflageelement (17) an das obere axiale Ende (8) des Grundkörpers (4) anschließt.

11. Dichtelement (1) nach einem der Ansprüche 9 bis 10, wobei das Auflageelement (17) eine im Wesentlichen rechteckige Grundform, vorzugsweise eine im Wesentlichen quadratische Grundform, aufweist.

12. Dichtelement (1) nach einem der Ansprüche 9 bis 11, wobei die Durchgangsausnehmung (3) in dem Auflageelement (17) einen sich zu der Auflagefläche (18) hin konisch erweiternden ersten Eintrittsabschnitt (19) aufweist.

13. Dichtelement (1) nach einem der Ansprüche 9 bis 12, wobei die Durchgangsausnehmung (3) in dem Auflageelement (17) in einem zweiten Eintrittsabschnitt (21) als eine zylinderförmige Bohrung ausgestaltet ist, wobei sich der zweite Eintrittsabschnitt (21) an das obere axiale Ende (8) des Grundkörpers (4) anschließt.

14. Dichtelement (1) nach einem der Ansprüche 12 bis 13, wobei ein dritter Öffnungswinkel (20) des ersten Eintrittsabschnitts (19) aus einem Bereich von 90° bis 160°, vorzugsweise aus einem Bereich von 120° bis 135°, gewählt ist.

15. Drucksensorbaugruppe (2) für ein Kraftfahrzeug zur Aufprallerkennung mit einer Drucksensoreinheit (12) im Inneren eines Baugruppengehäuses, wobei die Drucksensoreinheit (12) ein im Inneren eines Drucksensorgehäuses (11) angeordnetes Sensierelement zum Detektieren eines Luftdrucks umfasst, wobei das Drucksensorgehäuse (11) eine Druckzuführöffnung (13) zur Zuführung des Luftdrucks von einem Druckeinlass des Baugruppengehäuses zu dem Sensierelement aufweist, wobei zwischen dem Drucksensorgehäuse (11) und einer Baugruppengehäusewand ein Dichtelement (1) zum Abdichten der Druckzuführöffnung (13) gegenüber dem Innenraum des Baugruppengehäuses derart angeordnet ist, dass das Dichtelement (1) die Druckzuführöffnung (13) umschließt und den Druckeinlass fluidisch mit der Druckzuführöffnung (13) verbindet, und wobei das Dichtelement (1) nach einem der Ansprüche 1 bis 14 ausgebildet ist.
